# EUROPEAN PATENT APPLICATION

(11) **EP 2 159 627 A1**
(43) Date of publication of application: **03.03.2010**
(21) Application number: 09000280.9
(22) Date of filing: 12.01.2009
(51) Int. Cl.: G02F 1/13

(54) **Flat screen assembly**

(30) Priority: 26.08.2008 CN 200820146869 U
(71) Applicant: Shenzhen TCL New Technology Ltd., Nanshan District Shenzhen Guangdong 518067 (CN)
(72) Inventor: Bertho, Dominique, 49320 Vauchretien (FR); Perrier, Jacques, 49100 Angers (FR); Bresteau, Eric, 49112 Pellouailles les Vignes (FR)
(74) Representative: Frese-Göddeke, Beate

(57) **Abstract**

A flat screen assembly comprises a flat screen panel (1), e.g. a LCD panel (1), a housing with at least a rear cover (2), a front cover (3) and a connection means.

The connection means comprises at least one connecting element (C) which, in an assembled position, is fixed to the flat screen panel (P) and to the rear cover (1). The connecting element (C) is provided with at least one locking element, which, in the assembled position, is connected to the connecting element (C) and engages corresponding locking means of the front cover (2).

## Description

### BACKGROUND OF THE INVENTION

### FIELD OF THE INVENTION

The present invention is related to a flat screen assembly, which comprises a flat screen panel and a housing, with at least a rear cover and a front cover. Flat screen assemblies are used for computers and TV apparatuses.

### DESCRIPTION OF THE PRIOR ART

A flat screen assembly, mentioned as a display apparatus, is described in the US 2002/0080297 A1. The display apparatus comprises a flat screen panel, namely an LCD panel and a panel support, and a housing with a front cover and a rear cover. It also comprises connection means, namely with at least one coupling and at least one rib. The coupling extends from one of either a rear surface of the front cover or a front face of the rear cover toward the other thereof, having a groove formed on its plane. The rib is formed by the other thereof and is engaged with the groove of the coupling.

The couplings and the ribs extending along side the sides of the LCD panel still need a certain amount of space. The couplings and the ribs are all parts of the housing and connect the front cover and the rear cover with a limited snapping force.

In the US 2003/0227581 A1 a similar flat screen assembly, mentioned as a display apparatus, is described. Its connection means comprise added reinforcement elements, which need an additional amount of space between the LCD panel and the front cover.

A thin display apparatus known from the US 2004/0012729 A1 comprises a separate LCD frame provided around a LCD panel, a plurality of first combining parts formed on peripheral sides of the LCD frame and a plurality of second combining parts formed on the plane of the LCD frame. A front cover is placed in front of the LCD panel, covering the sides of the LCD panel and is combined to one of the first and second combining parts. A rear cover is placed behind the LCD panel and is combined to the other one of the combining parts. The front and rear cover are made of a conductive metal.

The separate LCD frame needs a significant amount of space between the LCD panel and the front cover. In addition, screws are visible on the front cover, which is formed with a plurality of through holes for the screws in order to couple the front cover to the LCD frame.

US 2003/0189681 A1 describes a structure for mounting a flat display module with a LCD display module, a rear cover and a front cover. The structure includes a supporting member for fixing the LCD display module within the rear cover. The supporting member comprises a supporting part which is plane-contacted with the rear side of the LCD display module, a horizontal guide portion which is vertically bent from the lateral side of the supporting part and a vertical guide portion which is vertically bent from the upper side of the supporting part. A joining part and a position guiding tab are bent upward from the end of the vertical guide portion.

These two parts need a gap between the LCD module and the rear cover. Due to the gap, a frame of the front cover is enlarged. The front cover is separately secured by a side mounting structure or a hook to the LCD display module.

### SUMMARY OF THE INVENTION

It is therefore desirable to improve a flat screen assembly according to the preamble of claim 1, in order to simplify the mounting of the assembly. In addition, it is desirable to improve a flat screen assembly with respect to a good contact between the parts of the housing itself and between the housing parts and the flat screen panel and with respect to a small gap between the flat screen panel and the housing.

According to the invention this can be achieved by the features of claim 1. Possible advantageous developments of the invention are specified in the dependent claims.

A flat screen assembly of the invention comprises a flat screen panel, e.g. a LCD panel, and a housing with a rear cover, a front cover and with connection means. The connection means comprise at least one connecting element which, in an assembled position, is fixed to the flat screen panel and to the rear cover. According to the invention, the connecting element is provided with at least one locking element, which, in the assembled position, is connected to the connecting element and engages a corresponding locking means of the front cover.

As an advantage of the invention, only one connecting element with at least one locking element is used in order to connect all three parts, namely the flat screen panel, the rear cover and the front cover. As a result, the mounting of the assembly is improved and the gap between the flat screen panel and the housing is minimized. A small gap enables a desirable small frame portion of the front cover.

Due to the locking element for the connecting element, which engages the locking means of the front cover, it is possible to apply a certain pressure between the front cover and the assembly of the flat screen panel and the rear cover. This ensures a good contact between the housing parts itself as well as between the housing parts and the flat screen panel.

In a preferred embodiment of the invention, the connecting element is generated as a plate, of which at least a side portion extends parallel to a side of the flat screen panel between the side and a skirt portion of the front cover. The side portion of the plate is provided with one opening for each locking element. The locking element is pivot-mounted in the opening, where the locking element is connected to the plate by pivoting the locking element in the opening. The use of the plate and the locking element enables a very narrow gap between the flat screen panel and the front cover.

Advantageously, in the assembled position, at least a front portion of the locking element is arranged onto the front of the plate outside of the opening O, while at least a rear portion is arranged onto the rear of the plate. As a result, in the assembled position, the locking element is connected to the plate.

In a preferred embodiment of the invention, the locking means comprises one lug for each locking element, while the locking element comprises a first clip which, in the assembled position, is arranged beneath a first lug part of a lug extending from the front cover parallel to the screen area. The first clip applies pressure to the first lug part vertical to a screen area of the flat screen panel. As a result, the generated vertical force between the front cover and the flat screen panel ensures a good contact between the flat screen panel and the front cover as well as between the rear cover and the front cover.

Advantageously, the locking element comprises a second clip which, in an assembled position, is arranged in front of a second lug part of the lug extending from the first lug part vertical to the screen area. The second clip applies pressure to the first lug part parallel to the screen area and blocks the lug from sidestepping the locking element. The generated parallel vertical force between the front cover and the flat screen panel ensures the position of the first clip beneath the first lug part.

Preferably, the plate comprises the edge portion at which, in the assembled position, the plate is fixed to the flat screen panel and a rear portion, which extends from the side portion over the rear of the flat screen panel and at which, in the assembled position, the plate is fixed to the rear cover.

Preferably, the connecting means comprises at least two locking elements for each plate.

Preferably the connection means comprises at least two connecting plates arranged at opposite sides of the flat screen panel.

In an embodiment of the invention, the plates are generated by metal brackets.

### BRIEF DESCRIPTION OF THE DRAWINGS

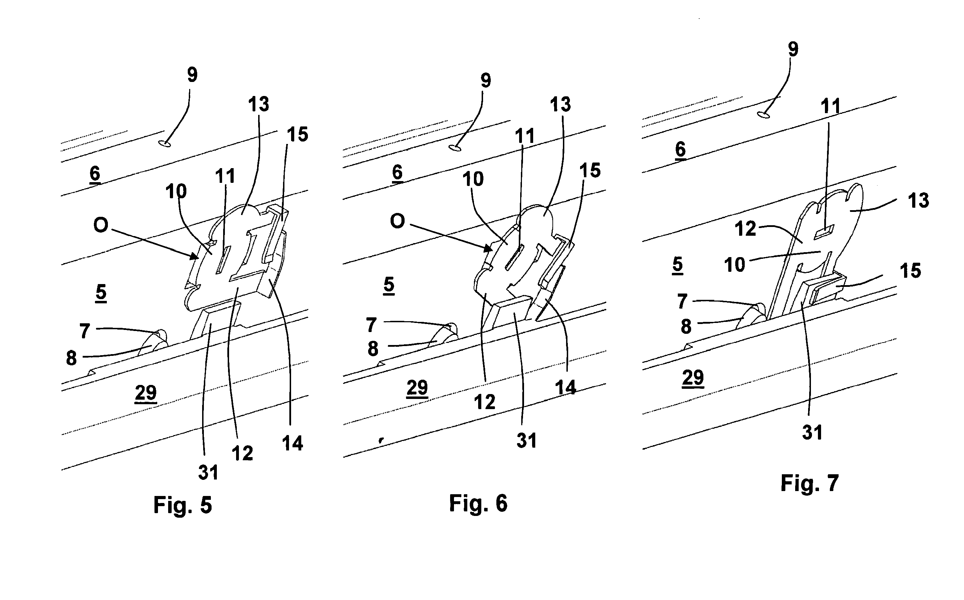

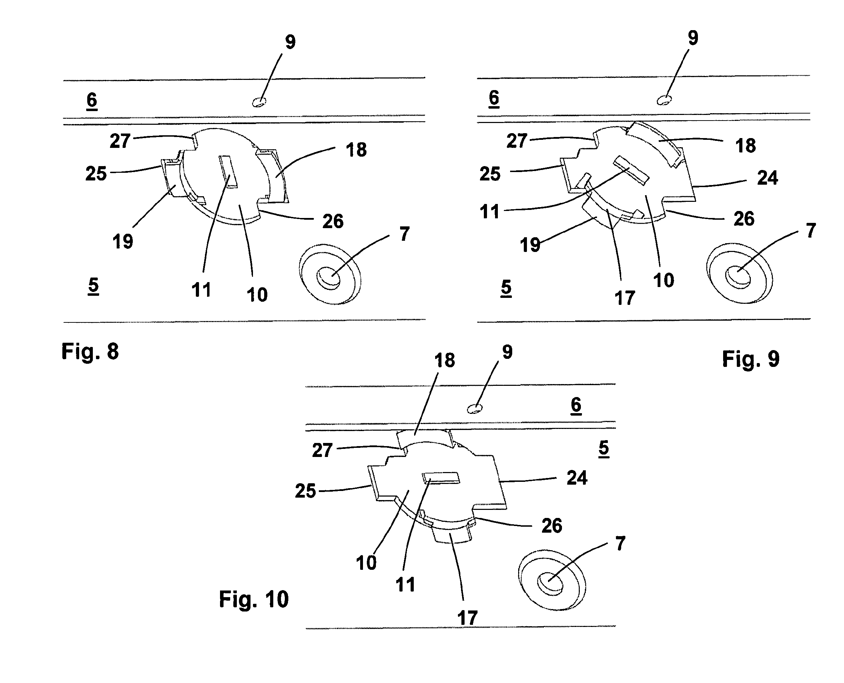

The invention will be explained in more detail using one embodiment, which is illustrated in figures 1 to 8. It shows:
Figure 1, a simplified perspective view of a flat screen panel arranged on the front cover showing, in front of them, one connecting element generated as a plate with three openings and three locking elements;
Figure 2, a simplified perspective view of the flat screen panel arranged on a front cover where the plate is fixed to the flat screen panel and where the locking elements are arranged in the openings of the plate, in an unassembled position;
Figure 3, a simplified perspective view of one locking element showing its front side;
Figure 4, a simplified perspective view of one locking element showing its rear side;
Figure 5, a detailed view of figure 2 showing the locking element in the opening of the plate in the unassembled position;
Figure 6, a detail view corresponding to figure 5 showing the locking element pivoted 45°;
Figure 7, a detail view corresponding to figure 5 showing the locking element pivoted 90°, i.e. in an assembled position connected with the flat screen panel;
Figure 8, a detailed view showing a rear side of the plate and the locking element of figure 5;
Figure 9, a detailed view showing a rear side of the plate and the locking element of figure 6;
Figure 10, a detailed view showing a rear side of the plate and the locking element of figure 7;
Figure 11, a simplified cross section of an assembly of the flat screen panel, the front cover, where the locking means are in the unassembled position;
   and
Figure 12, a simplified cross section of the assembly, where the locking means are in the assembled position.

### DETAILED DESCRIPTION OF THE INVENTION

A flat screen assembly of an embodiment of the invention comprises a flat screen panel P, which is generated e.g. by a LCD panel, and a housing with at least a rear cover 1 and a front cover 2. The housing also comprises connection means with at least one connecting element C which is provided with at least one locking element. In particular, in a first embodiment the housing comprises four connecting elements C, each with three locking elements.

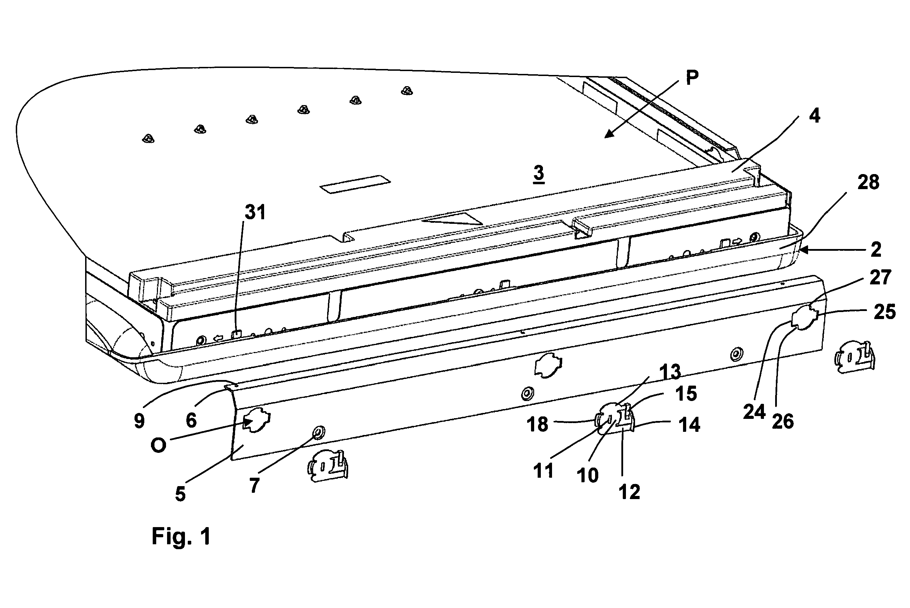

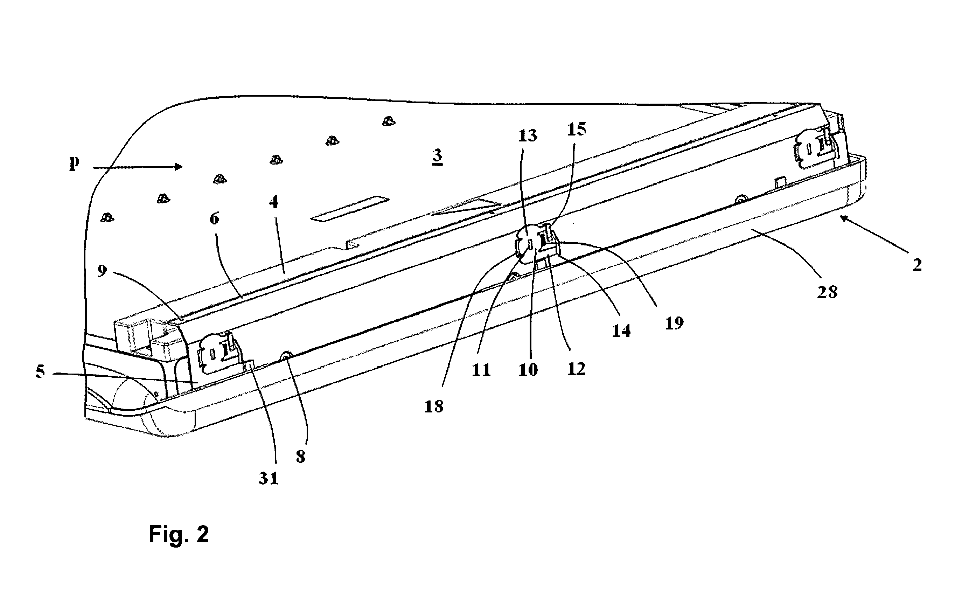

As shown in figures 1 and 2, the flat screen panel P has a panel body 3 which basically has the shape of a cuboid, and comprises further components 4, e.g. at the rear of the panel body 3. One of the four connecting elements C is arranged at each of the four sides of the flat screen panel P, namely of its panel body 3. One of the connecting elements C is shown in figures 1 and 2.

Each connecting element C is made up of a thin plate with a side portion 5 extending in front of the corresponding side of the flat screen panel P and a rear portion 6 extending over the rear of the flat screen panel P.

In particular, the side portion 5 of the plate covers an essential amount of the side of the flat screen panel P and is provided with first holes 7 and screws 8 which, in an assembled position, fix the plate, i.e. the connection element C, through the holes 7 to the flat screen panel P.

The plate being fixed on the side of the flat screen panel P extends vertical to a screen area of the flat screen panel P.

The rear portion 6 of the plate is bent from the side portion 5 to the rear of the flat screen panel P and protrudes by a certain amount over the rear of the flat screen panel P. In its protruding region the rear portion 6 of the plate is provided with second holes 9 for fixing the plate, i.e. the connecting element C, to the rear cover 1.

The side portion 5 of the plate is provided with one opening O for each locking element, in which the locking element is pivoted-mounted in order to be moved into its assembled position. Figure 2 shows the plate with the three locking elements in the openings O in an unassembled position.

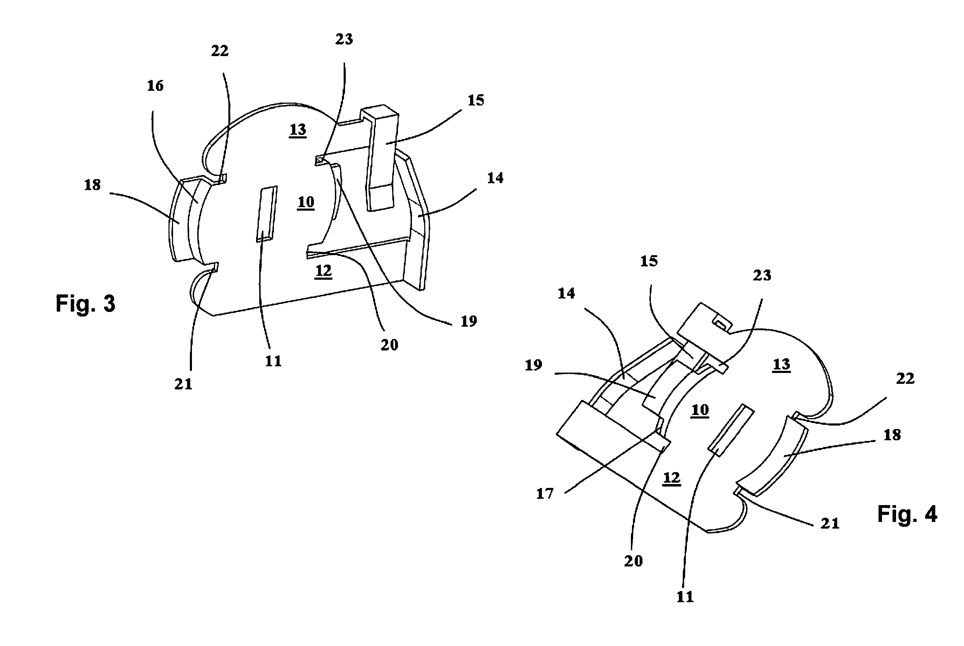

The locking elements are shown in detail in figures 3 and 4. Each locking element is generated by a thin disk with a nearly circular body 10, which has a central tool opening 11, with two arms 12, 13 at opposite sides of the body 10 and with two steps at the other opposite sides of the body 10.

In this embodiment, the tool opening 11 has the shape of a small rectangle.

The first and second arm 12, 13 have the shape nearly of a elongated rectangle, where the arms 12, 13 extend parallel to each other and, in this embodiment, perpendicular to the longer side of the tool opening 11, at the sides of the body 10. The arms 12, 13 protrude with their one ends over the body 10, where the first arm 12 is provided with a first clip 14 at its one end and the second arm 13 is provided with a second clip 15 at its corresponding end. The other ends of the arms 12, 13 are rounded down and located nearly inline with the border of the body 10. The second arm 13 has a rounded, outwards extension in the region of the body 10.

The body 10 and the arms 12, 13 are all parts of the disk, i.e. they have the same thickness and the same orientation.

The first arm 12 with the first clip 14 also protrudes over the second arm 13 with the second clip 15. The first clip 14 has the shape of a strip which is arranged perpendicular to the body 10 at a front side of the body 10 and which extends from the end of the first arm 12 in a direction just under the second arm 13. The first clip 14 is bent in a direction to the body 10 and ends near the end of the second arm 13.

The second clip 15 has the shape of a strip which is linked to the end of the second arm 13 and arranged parallel to the body 10 at the front side of the body 10. The second clip 15 extends from the end of the second arm 13 in a direction to the first arm 12 and is arranged between the body 10 and the first clip 14 near the first clip 14. The second clip 15 is slightly bent at its end in a direction away from the front side of the body 10.

The first clip 14 and the second clip 15 have the same thickness as the body 10.

The steps are generated by two-part extensions from the body 10, where ring-shaped opening parts 16, 17 following the body 10 extend perpendicular to the body 10 at the rear side of the body 10, and ring-shaped rear parts 18, 19 following the opening parts 16, 17 extend parallel to the body 10 at the rear side of the body 10. The width of one of the steps, in particular the width of the rear part 19, is less than the width of the other step, in particular of the other rear part 18. In this embodiment, the width of the rear part 19 of the step, which is arranged between the protruding ends of arms 12, 13 with the clips 14, 15, is less than the width of the other rear part 18.

The body 10 is provided with four recesses 20, 21, 22, 23 between the steps and the arms 12, 13, which have the shape of rectangular grooves.

The thickness of the opening parts 16, 17 and of the rear parts 18, 19 is the same as the thickness of the body 10. The locking element as a whole is manufactured out of one piece, i.e. out of one metal disk or out of one metal plate. The thickness of the locking element ranges from 0,4 to 1,0 mm, preferably from 0,6 to 0,8 mm. Preferably, the thickness of the locking element is less than the thickness of the plate.

Each opening O has the shape of a circle with extensions 24, 25 and recesses 26, 27. The diameter of the circle corresponds to that of the body 10 of the locking element, namely of the outside diameter of a cylinder generated by the opening parts 16, 17 of the steps, in a way that the locking element is able to be pivot-mounted in the opening O.

The extensions 24, 25 of the opening O correspond to the rear parts 18, 19 of the steps in a way that the rear parts 18, 19 are able to pass through the opening O in the unassembled position. The different widths of the two rear parts 18, 19 and the corresponding extensions 24, 25 ensure the right operation, i.e. that the locking element is put in the opening O at the correct orientation.

The first recess 26 of the opening O corresponds to recesses 20, 21 between the first arm 12 and the steps, and the second recess 27 corresponds to recesses 22, 24 between the second arm 13 and the steps. Recesses 26, 27 correspond with recesses 20 to 24 in a way that the locking element is stopped at its recesses 20, 23 in the assembled position after rotation.

In the assembled position, at least a front portion of the locking element is arranged onto the front of the plate outside of the opening O, while at least a rear portion is arranged onto the rear of the plate. In this embodiment, a certain amount of the arms 12, 13, which are front portions of the locking element, is arranged onto the front of the plate outside of the opening O and the rear parts 18, 19 of the steps, which are rear portions of the locking element, are arranged onto the rear of the plate.

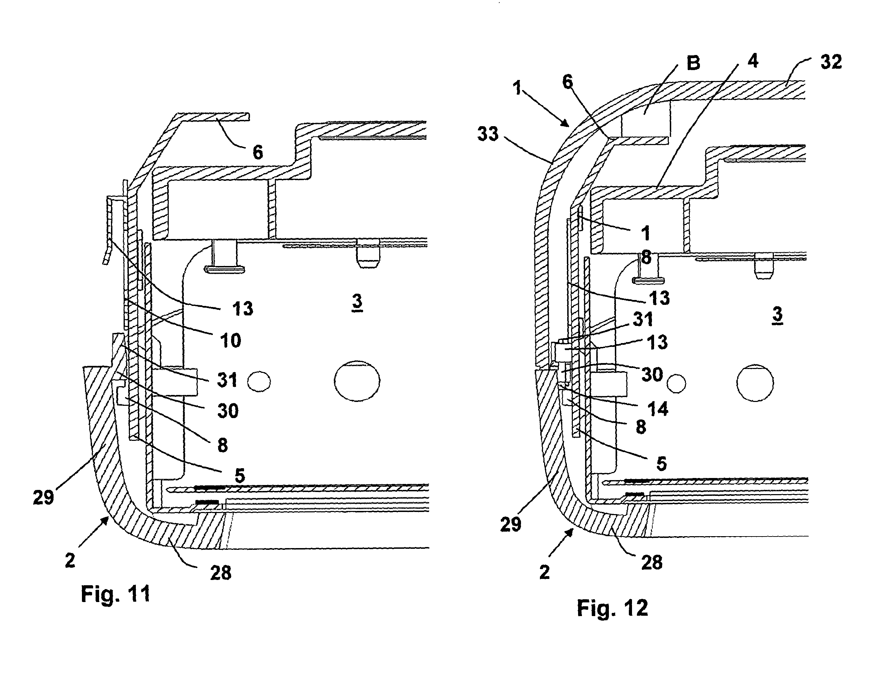

Figures 1 and 2, in particular, show the flat screen panel P arranged on the front cover 2. The front cover 2 has a frame portion 28 and a skirt portion 29. The frame portion 28 is not visible in figures 1 and 2, however it is visible in figures 11 and 12. The skirt portion 29 of the front cover 2 is generated by four side walls, which extend over the sides, namely over a third of the sides, of the flat screen panel P. As a result, the skirt portion 29 of the front cover 2 ends beneath the openings O.

The front cover 2 is provided with locking means for the locking elements, which extend from the front cover 2 to the flat screen panel P, i.e. to the plate. For each locking element the locking means comprise a lug with a first lug part 30 and a second lug part 31. The first lug part 30 extends from the upper end of the skirt portion 29 of the front cover 2 in a direction vertical to the plate and parallel to the screen area of the flat screen panel P. The following second lug part 31 extends in a direction parallel to the plate and vertical to the screen area.

In the assembled position, each locking element engages the lugs of the locking means of the front cover 2. In particular, the first clip 14 is arranged beneath the corresponding first lug part 30 and the second clip 15 is arranged in front of the second lug part 31.

The first clip 14 applies pressure onto the first lug part 30 vertical to the screen area and enables a good connection between the front cover 2 and the flat screen panel P.

The second clip 15 applies pressure to the second lug part 31 parallel to the screen area and ensures the engaging of the first clip 14 with the first lug part 30. As a result, the locking element is securely engaged with the front cover 2.

As shown in figure 12, the rear cover 1 has a bottom portion 32 and a wall portion 33, which corresponds to the skirt portion 29 of the front cover 2 and which is generated by four side walls. The side walls of the rear cover 1 extend over the sides, namely over two thirds of the sides, of the flat screen panel P and fit with the corresponding side walls of the front cover 2.

As indicated in figure 12, the plate i.e. the connecting element C, is connected to the rear cover 1 with second screws, which protrude through bosses B of the rear cover 1 and through the second holes 9.

Four steps are taken in order to assemble the flat screen panel P with the front cover 2 and the rear cover. In a first step the plate is fixed to the flat screen panel P and the flat screen panel P is arranged on the front cover 2. In a second step, the locking elements are put in the openings O in the unassembled position, shown in figure 2. In a third step the locking element are pivoted 90°by a hand tool, namely a hand screwdriver, which corresponds to the tool opening 11 of the locking element. After rotation, the first clip 14 is arranged beneath the corresponding first lug part 30 and the second clip 15 is arranged in front of the second lug part 31. In a fourth step the rear cover 1 is fixed to the plate of the locking element. In the assembled position, the locking elements, which are fixed to the flat screen panel P and to the rear cover 1, generate forces to the front cover and enable an overall good connection between all three parts, the rear cover 1, the front cover 2 and the flat screen panel P.

The connecting element C, i.e. the plates, are generated as metal brackets and manufactured with punching tools and/or bending tools, namely with tools used by the metal part manufacturing. The thickness of metal which is used for the plates ranges from 1,0 to 1,5 mm.

The rear cover 1 and the front cover 2 are generated by a Polystyrene High Impact.

The screen size of this embodiment ranges from 24" to 50" or more.

In a second embodiment, a flat screen assembly with a small flat screen panel P, namely with a screen size of e.g. 17" to 32", is used. The assembly is provided with four connecting elements C each with only two openings O and with two corresponding locking elements. As an alternative, an assembly with a small screen is provided with only two connecting elements C.

In a further embodiment, a flat screen assembly with a large screen is provided with connecting elements C with four or more locking elements and with the corresponding openings O. As an alternative, an assembly with a large screen is provided with six or more connecting elements C.

As an alternative, the flat screen assembly has a flat screen panel corresponding to the plasma technology.

## Claims

1. A flat screen assembly comprising
a flat screen panel (P), a housing with at least a rear cover (1), a front cover (2) and a connection means,
the connection means comprises at least one connecting element (C) which, in an assembled position, is fixed to the flat screen panel (P) and to the rear cover (1),
where the connecting element (C) is provided with at least one locking element, which, in the assembled position, is connected to the connecting element (C) and engages corresponding locking means of the front cover (2).

2. A flat screen assembly according to claim 1, **characterized in that** the connecting element (C) is generated as a plate, of which, in the assembled position, at least a side portion (5) extends parallel to a side of the flat screen panel (P) between the side and a skirt portion (29) of the front cover (2) and the flat screen panel (P) and which is provided with one opening (O) for each locking element, while, in order to get in the assembled position, the locking element is pivot-mounted in the opening (O).

3. A flat screen assembly according to claim 1 or 2, **characterized in that**, the locking element, in the assembled position, applies pressures to the locking means of the front cover (2) in a direction vertical to a screen area.

4. A flat screen assembly according to claim 2 or 3, **characterized in that**, in the assembled position of the locking element, at least a front portion of the locking element is arranged onto the front of the plate outside of the opening O, while at least a rear portion of the locking element is arranged onto the rear of the plate.

5. A flat screen assembly according to one of the claims 2 to 4, **characterized in that** the locking means comprises one lug for each locking element, while the locking element comprises a first clip (14) which, in the assembled position of the locking element, is arranged beneath a first lug part (30) of the lug extending from the front cover (2) parallel to the screen area.

6. A flat screen assembly according to claim 5, **characterized in that** the locking element comprises a second clip (15) which, in an assembled position of the locking element, is arranged in front of a second lug part (31) of the lug extending from the first lug part (30) vertical to the screen area.

7. A flat screen assembly according to one of the claims 2 to 6, **characterized in that** the plate comprises the side portion (5) at which, in the assembled position, the plate is fixed to the flat screen panel (P) and a rear portion (6), which extends from the side portion (5) over the rear of the flat screen panel (P) and at which, in the assembled position, the plate is fixed to the rear cover (1).

8. A flat screen assembly according to one of the claims 2 to 7, **characterized in that** the connecting means comprises at least two locking elements for each plate.

9. A flat screen assembly according to one of the claims 2 to 8, **characterized in that** the connection means comprises at least two plates arranged at opposite sides of the flat screen panel (P).

10. A flat screen assembly according to one of the claims 1 to 9, **characterized in that** the plates are generated by metal brackets.
